# EUROPÄISCHE PATENTANMELDUNG

(11) **EP 2 811 180 A1**
(43) Veröffentlichungstag der Anmeldung: **10.12.2014**
(21) Anmeldenummer: 14165672.8
(22) Anmeldetag: 23.04.2014
(51) Int. Cl.: F16B 25/00, E06B 3/984, F16B 5/02

(54) **Schraube**

(30) Priorität: 06.06.2013 DE 102013210554
(71) Anmelder: Adolf Würth GmbH & Co. KG, 74653 Künzelsau (DE)
(72) Erfinder: Wunderlich, Andreas, 74635 Kupferzell (DE); Vybiralik, Sascha, 71717 Beilstein (DE)
(74) Vertreter: Patentanwälte Ruff, Wilhelm, Beier, Dauster & Partner

(57) **Zusammenfassung**

Eine Schraube enthält einen Schraubenkörper mit einem Schraubenantriebsende (1) und einer Schraubenspitze (4). Der Schraubenkopf enthält 2 Gewindeabschnitte, von denen einer von der Schraubenspitze ausgeht und der andere von dem Schraubenantriebsende. Die Steigung des von dem Schraubenantriebsende ausgehenden Gewindes (5) ist geringfügig kleiner als die Steigung des Gewindes (8), das von der Schraubenspitze ausgeht. Beim Verschrauben der Schenkel eines Fensterrahmens wird dadurch der äußere Schenkel am Ende des Schraubvorgangs gegen den inneren Schenkel verpresst.

## Beschreibung

Die Erfindung geht aus von einer Schraube, die zwei Gewindeabschnitte mit jeweils einem Gewinde aufweist, von denen ein Gewindeabschnitt von der Schraubenspitze ausgeht, während der andere Gewindeabschnitt von dem Schraubenkopf ausgeht. Solche Schrauben dienen zur Befestigung von Gegenständen an einer Unterkonstruktion. Es gibt Schrauben, bei denen der von dem Schraubenkopf ausgehende Gewindeabschnitt einen größeren Durchmesser aufweist als der von der Schraubenspitze ausgehende Gewindeabschnitt. Diese dienen beispielsweise zur Befestigung von Fensterrahmen am Mauerwerk. Ebenfalls bekannt sind solche Schrauben, bei denen die beiden Gewindeabschnitte den gleichen Durchmesser aufweisen. Diese Schrauben werden häufig auch als Abstandsmontageschrauben bezeichnet.

Ebenfalls bekannt ist eine Dachschraube, bei der die beiden Gewindeabschnitte unterschiedliche Durchmesser und eine unterschiedliche Steigung aufweisen. Die Steigung des von dem Schraubenkopf ausgehenden Gewindeabschnitts ist dabei um etwa 1/10 mm kleiner als die Steigung des vorderen Gewindeabschnitts. Diese Schraube wird zur Befestigung der Konterlattung an Dachsparren verwendet, wobei sie die Konterlattung gegen eine Dachisolation presst, die zwischen der Konterlattung und den Dachsparren angeordnet ist. Der von dem Kopf ausgehende Gewindeabschnitt greift dabei nicht nur in die Konterlattung, sondern auch in die Isolation ein. Dieser Gewindeabschnitt ist länger als der von der Spitze ausgehende Gewindeabschnitt.

Ebenfalls bekannt ist eine Schraube mit zwei Gewindeabschnitten, von denen das Unterkopfgewinde eine deutlich niedrigere Steigung aufweist als das von der Schraubenspitze ausgehende Grobganggewinde. Diese Schraube ist zum Anschrauben von Plattenwerkstoffen an Unterkonstruktionen bestimmt. Das Unterkopfgewinde weist etwa drei Gewindegänge auf. Es soll ein Überdrehen der Schraube verhindern, bevor der Senkkopf in dem oberen Bauteil versenkt ist.

Für den Zusammenbau von Fensterrahmen ist auch ein zweiteiliges System aus einer Buchse mit außenliegendem Gewinde und in die Buchse eingesteckter Schraube bekannt. Das Gewinde der Buchse und das Gewinde der Schraube weisen eine unterschiedliche Steigung auf, so dass die Rahmenschenkel beim gleichzeitigen Verdrehen von Buchse und Schraube zusammengezogen werden.

Der Erfindung liegt die Aufgabe zu Grunde, eine Schraube zu schaffen, die sich zum Verbinden der Eckbereiche von aus Holz bestehenden Fensterrahmen besonders gut eignet, ohne dass die Anwendung dieser Schraube zu Beschädigungen des Fensterrahmens führt.

Zur Lösung dieser Aufgabe schlägt die Erfindung eine Schraube mit den im Anspruch 1 genannten Merkmalen vor. Weiterbildungen der Erfindung sind Gegenstand von Unteransprüchen.

Die Schraube ermöglicht es, durch den lagerichtig angeordneten ersten Schenkel des Fensterrahmens hindurch in den zweiten Schenkel zu schrauben, so dass gegen Ende des Schraubvorgangs die beiden Schenkel des Rahmens miteinander verbunden sind und der erste Schenkel gegen den zweiten Schenkel angepresst wird.

In Weiterbildung der Erfindung kann vorgesehen sein, dass die Differenz der beiden Gewindesteigungen bei einem Verhältnis von etwa zwischen 3% und 5% liegt, vorzugsweise bei etwa 4%. Dies bedeutet, dass bei einer Schraube mit einem üblichen Durchmesser von 6 mm der Gewindesteigungsunterschied etwa 5/100 mm beträgt. Es hat sich herausgestellt, dass bei diesem Unterschied ein Anpressen ohne eine Beschädigung der Schenkel des Rahmens und/oder ohne Überdrehen eines der beiden Gewinde erfolgt.

In weiterer Ausgestaltung der Erfindung kann vorgesehen sein, dass das Verhältnis zwischen der Länge des von der Schraubenspitze ausgehenden Gewindeabschnitts und der Länge des von dem Schraubenantriebsende ausgehenden Gewindes bei etwa 2,5 bis etwa 3 liegt.

In nochmals weiterer Ausgestaltung der Erfindung kann vorgesehen sein, dass der Flankenwinkel der Gewinde beider Gewindeabschnitte gleich ist. Er kann beispielsweise mit Vorteil im Bereich von 37° bis 43° liegen.

Die Erfindung schlägt in Weiterbildung vor, dass die Schraube zwischen den beiden Gewindeabschnitten einen gewindefreien Schaftabschnitt aufweist, der als Passbolzen wirkt. Dieser gewindefreie Schaftabschnitt kann eine Länge zwischen etwa 2 mm und etwa 20 mm aufweisen.

In einer weiteren Ausgestaltung der Erfindung kann vorgesehen sein, dass der Außendurchmesser des Gewindes in dem von dem Schraubenantriebsende ausgehenden Gewindebereich größer ist als der Außendurchmesser des Gewindes in dem von der Schraubenspitze ausgehenden Gewindebereich.

Insbesondere kann vorgesehen sein, dass der Außendurchmesser um etwa 4% größer ist.

Es kann nach einem weiteren Merkmal der Erfindung vorgesehen sein, dass die Länge des von dem Schraubenantriebsende ausgehenden Gewindeabschnitts im Bereich von etwa 30 mm bis 35 mm liegt. Dies entspricht etwa den üblichen Mindestmaßen von aus Holz bestehenden Fensterrahmen. Bei dickeren Rahmenteilen wird eine in ihrer Länge dem Übermaß entsprechende Vorbohrung vorweggenommen, damit der Schraubenkopf im eingeschraubten Zustand am Grund der Vorbohrung angeordnet ist. Die Anordnung der Schraube in den Rahmenteilen kann dann der Anordnung in Rahmenteilen ohne Übermaß, also mit Standardabmessungen, entsprechen. Die Vorbohrung wird im Radius etwa 1 mm bis 2 mm größer als der Durchmesser des Schraubenkopfes vorvorgenommen.

Es kann ebenfalls vorgesehen sein, dass das Gewinde des von dem Schraubenantriebsende ausgehenden Gewindeabschnitts zwischen fünf und neun Gewindewindungen, vorzugsweise sieben Gewindewindungen aufweist.

Es kann vorgesehen sein, dass die Länge des von der Schraubenspitze ausgehenden Gewindeabschnitts im Bereich von etwa 80 mm bis 90 mm liegt.

An dem Schraubenantriebsende weist die Schraube eine Antriebsausbildung auf, mit deren Hilfe sie eingeschraubt werden kann, also beispielsweise einen Querschlitz oder eine Schraubenantriebsvertiefung. Es kann in Weiterbildung vorgesehen sein, dass die Schraube einen Schraubenkopf mit einem relativ kleinen Außendurchmesser aufweist, so dass beispielsweise mit Vorteil der Außendurchmesser des Schraubenkopfs kleiner als der Außendurchmesser des Gewindes, insbesondere des Gewindes in dem von dem Schraubenkopf ausgehenden Gewindebereich, ist.

Die Schraubenspitze kann als eine übliche Schraubenspitze von Spanplattenschrauben, beispielsweise als kegelförmige Spitze, ausgebildet sein, ebenso als Bohrerspitze oder als Schabespitze.

Erfindungsgemäß kann die Schraube eine Beschichtung aufweisen, beispielsweise eine Verzinkung, eine Zink-Lamellenbeschichtung oder eine Zinklegierung und optional daüber eine Gleitwachsbeschichtung.

Die Erfindung schlägt ebenfalls die Verwendung einer Schraube, wie sie hierin beschrieben wird, zur Verbindung der Schenkel eines Fensterrahmens in dem Eckbereich des Fensterrahmens vor. Dabei wird nicht nur eine Verbindung der beiden Schenkel hergestellt, sondern der äußere Schenkel wird durch die Schraube auch gegen den inneren Schenkel verpresst.

Bei der erfindungsgemäßen Verwendung kann vorgesehen sein, einen Fensterrahmen mit Rahmenschenkeln mit Übermaß zu verwenden, wobei wenigstens einer der Rahmenschenkel dann eine Vorbohrung hat, deren Tiefe dem Übermaß entspricht, damit die Schraube im Standardmaß versenkt wird. Mit anderen Worten ist ein Rahmenschenkel, auf den die Schraube vor dem Einschrauben aufgesetzt wird, in Einschraubrichtung um ein Übermaß dicker als die Länge des sich an das Schraubenantriebsende anschließenden Gewindeabschnitts zuzüglich einer Länge des Schraubenantriebsendes sowie eines optional vorgesehenen gewindefreien Abschnitts, wobei dieser Rahmenschenkel dann mit einer Vorbohrung versehen wird, deren Tiefe dem Übermaß entspricht. Auf diese Weise kann dann erreicht werden, dass ein Übergang zwischen den beiden Gewindeabschnitten im Bereich der Anlagefläche der beiden Rahmenschenkel zu liegen kommt. Ist ein gewindefreier Abschnitt zwischen den Gewindeabschnitten vorgesehen, so ist dann dieser gewindefreie Abschnitt im Bereich der Anlagefläche zwischen den beiden Rahmenschenkeln positioniert. Die Vorbohrung weist dabei einen Durchmesser auf, der größer ist als die Durchmesser der Schraubengewinde und des Schraubenantriebsendes.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Einzelmerkmale der unterschiedlichen Ausführungsformen können dabei in beliebiger Weise kombiniert werden, ohne den Rahmen der Erfindung zuüberschreiten. Hierbei zeigen:
- Figur 1: eine Seitenansicht eines ersten Ausführungsbeispiels einer von der Erfindung vorgeschlagenen Schraube;
- Figur 2: eine Seitenansicht einer zweiten Ausführungsform der Schraube nach der Erfindung und
- Figur 3: eine schematische Schnittansicht eines vorgebohrten Fensterrahmens.

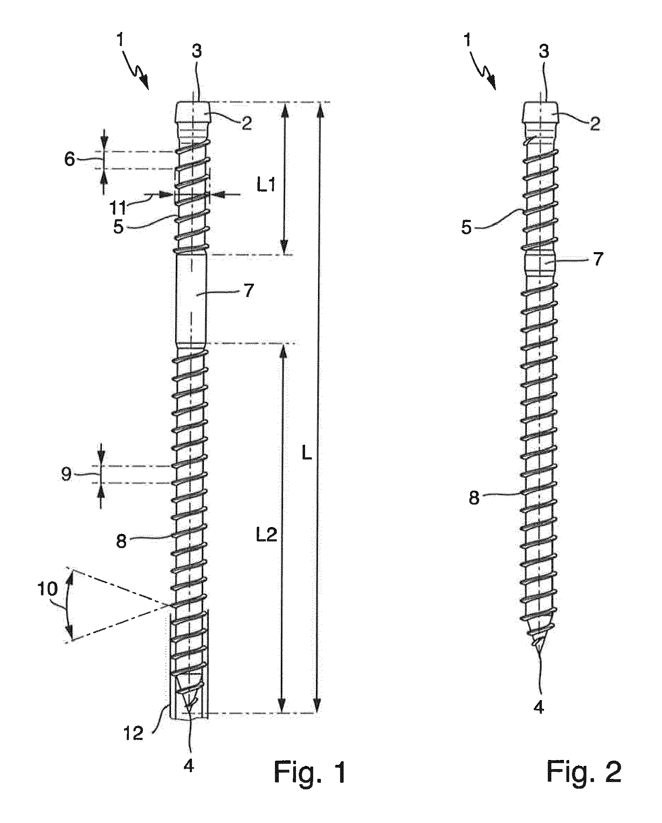

Die Figur 1 zeigt eine Seitenansicht einer Schraube, wie sie von der Erfindung für die Verbindung der Schenkelenden eines Fensterrahmens vorgeschlagen wird. Die Schraube enthält einen Schraubenkörper, dessen eines Ende 1 zum Antrieb der Schraube dient. Dieses Schraubenantriebsende 1 enthält einen Schraubenkopf 2 mit einer leicht konischen, alternativ zylindrischen, Außenform. In der Stirnfläche 3 des Schraubenkopfs ist eine Schraubenantriebsvertiefung ausgebildet. Am gegenüberliegenden Ende weist die Schraube eine Schraubenspitze 4 auf.

Unterhalb des Schraubenkopfs 2 ist ein erster Gewindeabschnitt gebildet, der ein Schraubengewinde 5 aufweist. Dieses Gewinde 5 weist eine Steigung 6 auf.

An den Gewindeabschnitt mit dem Gewinde 5 schließt sich ein gewindefreier Abschnitt 7 an.

An den gewindefreien Abschnitt 7 schließt sich dann ein vorderer Gewindeabschnitt mit einem zweiten Schraubengewinde 8 an. Dieses Schraubengewinde reicht bis zur Schraubenspitze 4. Das Gewinde 8 dieses vorderen Gewindeabschnitts weist eine Steigung 9 auf.

Das Gewinde 8 hat einen Flankenwinkel 10, der beispielsweise bei 40° liegt.

Die Steigung 6 des Gewindes 5 des von dem Schraubenkopf 2 ausgehenden Gewindeabschnitts ist um ca. 4% kleiner als die Steigung 9 des von der Schraubenspitze 4 ausgehenden Gewindes 8.

Der Außendurchmesser 11 des Unterkopfgewindes 5 ist um etwa 4% größer als der Außendurchmesser 12 des Gewindes 8 im vorderen Gewindeabschnitt.

### Beispiel:

Gesamtlänge der Schraube: 140 mm
Länge des Unterkopfgewindes einschließlich der Länge des Schraubenkopfs L1: 35 mm
Länge des vorderen Gewindeabschnitts L2: 85 mm
Länge des gewindefreien Schaftabschnitts 7: 20 mm
Steigung des Unterkopfgewindes 5: 4,2 mm
Steigung des vorderen Gewindes 8: 4,4 mm
Schaftdurchmesser: 6,25 mm
Außendurchmesser des Kopfgewindes: 8,7 mm
Außendurchmesser des vorderen Gewindes 8: 8,3 mm

Die Figur 2 zeigt eine zweite Ausführungsform der von der Erfindung vorgeschlagenen Schraube, bei der die Länge des gewindefreien Schaftabschnitts 7a fast auf Null verringert ist. Die absoluten Abmessungen sind bei dieser Ausführungsform im Übrigen die gleichen wie bei der vorhergehenden Ausführungsform.

Die Länge der erfindungsgemäßen Schraube liegt typischerweise zwischen 110 mm und 160 mm. Die erfindungsgemäße Schraube kann aus Stahl hergestellt und verzinkt sein. Eine Zink-Lamellen-Beschichtung kann aufgebracht sein. Ein Winkel der Gewindesteigung in dem vom Schraubenkopf ausgehenden Gewindeabschnitt kann in einem Bereich zwischen 10 ° und 15 ° liegen und insbesondere 12,2 ° betragen. Eine Gewindesteigung in dem von der Schraubenspitze ausgehenden Gewindeabschnitt kann in einem Bereich zwischen 10 ° und 15 ° liegen und insbesondere 12,6 ° betragen. Die erfindungsgemäße Schraube ist für den Zusammenbau von Fensterrahmen aus Holz vorgesehen, d.h. aus Hartholz oder Weichholz. Die Fensterrahmen können dabei als Blendrahmen ausgebildet sein, die am Mauerwerk eines Gebäudes befestigt werden, oder als Flügelrahmen, die dann im Endzustand eine Fensterscheibe tragen.

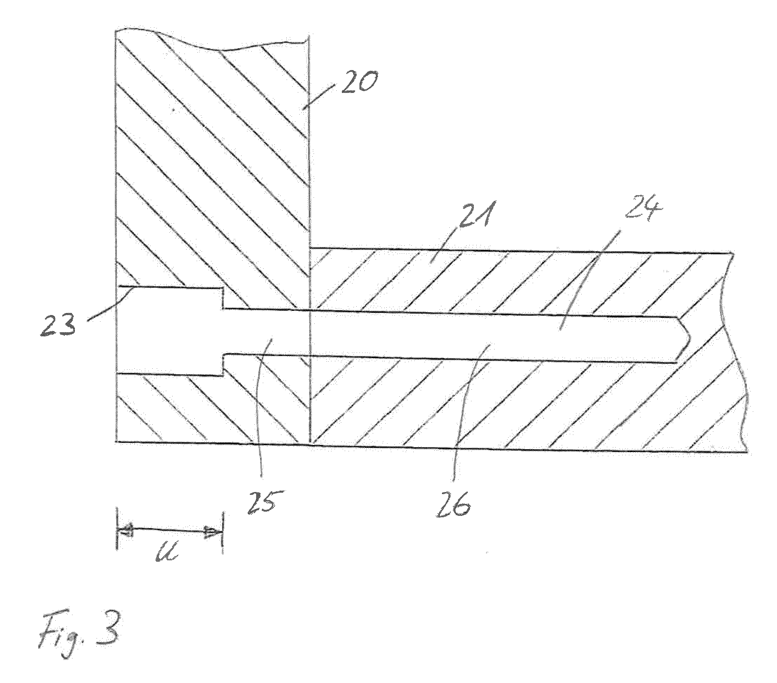

Die Fig. 3 zeigt schematisch eine Schnittansicht zweier lediglich teilweise dargestellter Rahmenschenkel 20, 21, die mit der erfindungsgemäßen Schraube gemäß Fig. 2 verbunden werden sollen. Da der Rahmenschenkel 20 gegenüber dem üblichen Standardmaß von Fensterrahmenschenkeln ein Übermaß U aufweist, muß vor Anbringung der erfindungsgemäßen Schraube eine Vorbohrung 23 vorgenommen werden. Die Vorbohrung 23 wird etwas größer als der Durchmesser des Schraubenkopfes 2 ausgeführt, so dass die Gewinde 5, 8 in der Vorbohrung 23 nicht greifen und dass der Schraubenkopf 2 im vollständig eingeschraubten Zustand am Grund der Vorbohrung 23 angeordnet ist. Die Vorbohrung 23 wird durch eine Sacklochbohrung 24 fortgesetzt, die einen kleineren Durchmesser als der Außendurchmesser der erfindungsgemäßen Schraube hat, so dass im Bereich der Sacklochbohrung 24 die Gewinde 5, 8 der Schraube sowohl in dem ersten Rahmenschenkel 20 als auch in dem zweiten Rahmenschenkel 21 greifen können. Es ist beispielsweise auch ohne weiteres möglich, die erfindungsgemäße Schraube ohne Anbringen der Sacklochbohrung 24 einzuschrauben. Es kann hier darauf ankommen, ob die Rahmenschenkel 20, 21 aus Weichholz oder Hartholz bestehen. Wird auf die Sacklochbohrung 24 verzichtet, wird vor dem Einschrauben der erfindungsgemäßen Schraube lediglich die Vorbohrung 23 in den ersten Rahmenschenkel 20 eingebracht.

Im montierten Zustand der Schraube ist dann der erste, vom Schraubenkopf 2 ausgehende Gewindeabschnitt mit dem Schraubengewinde 5 in einem Bereich 25 der Sacklochbohrung 24 angeordnet, der sich noch innerhalb des ersten Rahmenschenkels 20 befindet. An der Stoßstelle zwischen erstem Rahmenschenkel 20 und zweitem Rahmenschenkel 21 ist dann der gewindefreie Abschnitt 7 angeordnet. In einem Abschnitt 26 der Sacklochbohrung 24, der innerhalb des zweiten Rahmenschenkels 21 liegt, ist dann der vordere Gewindeabschnitt mit dem Gewinde 8 der Schraube angeordnet. Durch die unterschiedlichen Gewindesteigungen der Schraubengewinde 5, 8 wird nach dem vollständigen Eindrehen der Schraube dann der Rahmenschenkel 20 gegen die Stirnfläche des zweiten Rahmenschenkels 21 gepresst, sodass die beiden Rahmenschenkel 20, 21 unverrückbar aneinander befestigt sind.

## Patentansprüche

1. Schraube, mit
- einem Schraubenkörper mit einem Schraubenantriebsende (1) und einer Schraubenspitze (4),
- einem sich an das Schraubenantriebsende (1) anschließenden Gewindeabschnitt mit einem Gewinde (5),
- einem von der Schraubenspitze (4) ausgehenden Gewindeabschnitt mit einem Gewinde (8), wobei
- die Gewindesteigung (6) des sich an das Schraubenantriebsende (1) anschließenden Gewindes (5) kleiner ist als die Gewindesteigung (9) des von der Schraubenspitze (4) ausgehenden Gewindes (8).

2. Schraube nach Anspruch 1, bei der der Unterschied zwischen den beiden Gewindesteigungen (6, 9) bei einem Verhältnis zwischen etwa 3% und 5%, vorzugsweise bei etwa 4% liegt.

3. Schraube nach Anspruch 1 oder 2, bei der das Verhältnis zwischen der Länge (L2) des von der Schraubenspitze (4) ausgehenden Gewindes (8) und der Länge (L1) des dem Schraubenantriebsende (1) zugeordneten Gewindes (5) bei etwa 2,5 bis etwa 3 liegt.

4. Schraube nach einem der vorhergehenden Ansprüche, bei der der Flankenwinkel (10) beider Gewinde (5, 8) im Wesentlichen gleich ist.

5. Schraube nach einem der vorhergehenden Ansprüche, bei der der Schraubenkörper zwischen den beiden Gewindeabschnitten einen gewindefreien Schaftabschnitt (7) aufweist.

6. Schraube nach einem der vorhergehenden Ansprüche, bei der der Außendurchmesser (11) des Gewindes (5) in dem von dem Schraubenantriebsende (1) ausgehenden Gewindeabschnitt größer ist als der Außendurchmesser (12) des Gewindes (8) in dem von der Schraubenspitze (1) ausgehenden Gewindeabschnitt, vorzugsweise um etwa 4%.

7. Schraube nach einem der vorhergehenden Ansprüche, bei der die Länge des von dem Schraubenantriebsende (1) ausgehenden Gewindeabschnitts im Bereich von etwa 30 - 35 mm liegt und/oder das Gewinde (5) zwischen fünf und neun Gewindewindungen, vorzugsweise sieben Gewindewindungen, aufweist.

8. Schraube nach einem der vorhergehenden Ansprüche, bei der die Länge (L2) des von der Schraubenspitze (4) ausgehenden Gewindeabschnitts im Bereich von etwa 80 - 90 mm liegt und/oder das Gewinde (8) zwischen 18 und 22 Gewindewindungen, vorzugsweise 20 Gewindewindungen, aufweist.

9. Schraube nach einem der vorhergehenden Ansprüche, mit einem an dem Schraubenantriebsende (1) ausgebildeten Schraubenkopf (2), dessen Außendurchmesser kleiner als der Außendurchmesser (11) des Gewindes (5) ausgebildet ist.

10. Schraube nach einem der vorhergehenden Ansprüche, bei der die Schraubenspitze (4) als normale Schraubenspitze, als Bohrerspitze oder als Schabespitze ausgebildet ist.

11. Schraube nach einem der vorhergehenden Ansprüche, mit einer Verzinkung, insbesondere einer Zinklamellenbeschichtung oder einer Zinklegierung und optimal einer Gleitwachsbeschichtung auf wenigstens einem Teil ihrer Außenfläche.

12. Verwendung einer Schraube nach einem der vorhergehenden Ansprüche zum Verbinden von Rahmenschenkeln (20, 21) an den Ecken von Fensterrahmen.

13. Verwendung nach Anspruch 12, wobei ein Schraubenkörper der Schraube zwischen den beiden Gewindeabschnitten einen gewindefreien Schaftabschnitt (7) aufweist, wobei der gewindefreie Abschnitt im Bereich einer Anlagefläche zwischen zwei Rahmenschenkeln (20, 21) eines Fensterrahmens positioniert wird.

14. Verwendung nach Anspruch 12 oder 13, wobei ein Rahmenschenkel (20), auf den die Schraube vor dem Einschrauben aufgesetzt wird, in Einschraubrichtung gesehen um ein Übermaß dicker ist als die Länge des sich an das Schraubenantriebsende anschließenden Gewindeabschnitts zuzüglich einer Länge des Schraubenantriebsendes sowie eines optional vorgesehenen gewindefreien Abschnitts, und wobei dieser Rahmenschenkel (20) mit einer Vorbohrung (23) versehen wird, deren Tiefe dem Übermaß entspricht.

15. Verwendung nach Anspruch 13, wobei die Vorbohrung (23) einen Durchmesser aufweist, der größer ist als die Durchmesser der Schraubengewinde und des Schraubenantriebsendes.
